# EUROPEAN PATENT APPLICATION

(11) **EP 4 752 457 A1**
(43) Date of publication of application: **03.06.2026**
(21) Application number: 25756807.1
(22) Date of filing: 13.06.2025
(51) Int. Cl.: F25B 1/00, C09K 5/04, C10M 107/34, F25B 49/02, C10N 40/30

(54) **REFRIGERATION DEVICE**

(30) Priority: 30.09.2024 JP 2024170795
(71) Applicant: Daikin Industries, Ltd., Osaka-shi, Osaka 530-0001 (JP)
(72) Inventor: MINAMIDA, Tomoatsu, Osaka-shi, Osaka 530-0001 (JP); KONDO, Shigenori, Osaka-shi, Osaka 530-0001 (JP); TANAKA, Masaru, Osaka-shi, Osaka 530-0001 (JP)
(74) Representative: Hoffmann Eitle
(86) International application number: PCT/JP2025/021508
(87) International publication number: WO 2026/069864

(57) **Abstract**

An air conditioner 1, which is a refrigeration apparatus, includes a compressor 21; an outdoor heat exchanger 22, which is a condenser; an expansion mechanism 23; an indoor heat exchanger 31, which is an evaporator; and a refrigerant circuit 10 configured to circulate a refrigerant and refrigerating machine oil. The expansion mechanism 23 includes an expansion valve including a metal part. The refrigerant contains a hydrocarbon having one to four carbon atoms. The refrigerating machine oil is polyalkylene glycol, and contains an acid scavenger in an amount of 0.1% by weight to 2.0% by weight relative to the refrigerating machine oil. A filling amount of a sulfur-based odor component relative to a filling amount of the refrigerant is 50 ppm by weight to 2,000 ppm by weight.

## Description

### TECHNICAL FIELD

The present disclosure relates to a refrigeration apparatus.

### BACKGROUND ART

Conventionally, refrigeration apparatuses are known in which a highly flammable refrigerant with a low Global Warming Potential (GWP) value is sealed in a refrigerant circuit. In this type of refrigeration apparatus, it is important to recognize leakage of a refrigerant from the refrigerant circuit at an early stage and to avoid combustion of the refrigerant.

Patent Literature 1 discloses a refrigeration cycle device in which an odor component, which is a sulfur-based odorant, is sealed in a refrigerant circuit in addition to a refrigerant. When the refrigerant leaks from the refrigerant circuit, the odor component also leaks, so that people around the refrigerant can recognize abnormality and take necessary measures.

### CITATION LIST

### PATENT LITERATURE

Patent Literature 1: Japanese Patent No. 7162786

### SUMMARY OF THE INVENTION

### TECHNICAL PROBLEM

The odor component filled into the refrigerant circuit is partially decomposed in the interior of the refrigerant circuit, thereby generating an acid. The generated acid becomes a cause for, for example, corrosion of a metal part of the refrigerant circuit.

Therefore, it is necessary to fill the refrigerant circuit with an appropriate amount of an acid scavenger, which affects dissolution of a refrigerant and a refrigerating machine oil, the viscosity of a refrigerant, and the like.

The present disclosure provides a technique that can appropriately trap an acid generated from an odor component in a refrigerant circuit, and can ensure reliability of the refrigerant and the odor component of the refrigerant circuit.

### SOLUTION TO THE PROBLEM

In one aspect, the present disclosure provides a refrigeration apparatus including a compressor, a condenser, an expansion mechanism, an evaporator, and a refrigerant circuit configured to circulate a refrigerant and refrigerating machine oil. The expansion mechanism includes an expansion valve including a metal part. The refrigerant contains a hydrocarbon having one to four carbon atoms. The refrigerating machine oil is polyalkylene glycol, and contains an acid scavenger in an amount of 0.1% by weight to 2.0% by weight relative to the refrigerating machine oil. A filling amount of a sulfur-based odor component relative to a filling amount of the refrigerant is 50 ppm by weight to 2,000 ppm by weight.

According to the above, the odor component filled into the refrigerant circuit in an amount of 50% by weight to 2,000% by weight can provide a sufficient increase in a residual rate of the acid scavenger added to the refrigerating machine oil in an amount of 0.1% by weight to 2.0% by weight. Thus, when an acid is generated in the refrigerant circuit due to decomposition of the odor component, the acid scavenger can successfully trap the generated acid.

Also, the acid scavenger is 0.3% by weight to 1.0% by weight relative to the refrigerating machine oil.

In this case, the refrigeration apparatus can fill the refrigerant circuit 10 with the acid scavenger in an amount sufficient to trap an acid in the refrigerant circuit 10 while ensuring lubricity of the refrigerating machine oil.

Also, an amount of air mixed into the refrigerant circuit relative to the refrigerating machine oil is 500 ppm by weight or less.

In this case, the acid scavenger traps an acid in the air mixed into the refrigerant circuit, and thus the refrigeration apparatus can reduce the amount of the acid in the refrigerant circuit.

Also, an amount of water mixed into the refrigerant circuit relative to the refrigerating machine oil is 200 ppm by weight or less.

In this case, the acid scavenger traps an acid generated from water mixed into the refrigerant circuit, and thus the refrigeration apparatus can reduce the amount of the acid in the refrigerant circuit.

Also, the refrigerating machine oil is an oil in which the refrigerant and the refrigerating machine oil are dissolved in a case in which a concentration of the refrigerating machine oil contained in a mixture of the refrigerant and the refrigerating machine oil is 40% by weight or more.

In this case, the refrigerant and the refrigerating machine oil are dissolved in the refrigerant circuit, and thus the refrigeration apparatus can successfully circulate the refrigerating machine oil.

The refrigerating machine oil further contains an extreme pressure agent.

In this case, the refrigeration apparatus can appropriately avoid wear and seizing in the compressor of the refrigerant circuit.

Also, the refrigerating machine oil further contains an antioxidant.

In this case, the refrigeration apparatus can reduce oxidation of the refrigerating machine oil.

Also, a discharge gas temperature of the refrigerant discharged from the compressor is controlled to be 120°C or lower.

In this case, the refrigeration apparatus can lower the temperatures of the refrigerant, the odor component, and the refrigerating machine oil, and thus can suppress decomposition or the like of the odor component.

Also, the refrigerant is a highly flammable refrigerant.

In this case, the refrigeration apparatus can fill the refrigerant circuit with a refrigerant with a low GWP value, and this refrigerant can successfully perform heat exchange in the condenser and the evaporator. Moreover, the filling amount of the odor component is 50% by weight to 2,000% by weight, and thus the odor component leaks along with the refrigerant. This can stably encourage people to evacuate.

Also, the odor component is selected from the group consisting of sulfides and thiophenes.

In this case, the odor component filled into the refrigerant circuit suppresses a significant reduction in the acid scavenger.

Also, the odor component is tetrahydrothiophene.

In this case, the odor component enables people to recognize abnormality upon leakage of the refrigerant circuit while suppressing a reduction in the acid scavenger.

Also, the odor component is dimethyl sulfide.

In this case, the odor component enables people to recognize abnormality upon leakage of the refrigerant circuit while suppressing a reduction in the acid scavenger.

Also, the odor component is ethyl methyl sulfide.

In this case, the odor component enables people to recognize abnormality upon leakage of the refrigerant circuit while suppressing a reduction in the acid scavenger.

Also, a viscosity at 40°C of a mixture containing the refrigerating machine oil and the acid scavenger is 5 cSt to 300 cSt.

In this manner, when the viscosity of the refrigerating machine oil and the acid scavenger is 5 cSt to 300 cSt, it is possible to smoothly circulate, in the refrigerant circuit, the refrigerating machine oil to which the acid scavenger is added.

Also, a volume specific resistance at 40°C of the refrigerating machine oil is 1×10⁶ Ω·m or higher.

In this manner, when the volume specific resistance of the refrigerating machine oil is 1×10⁶ Ω·m or higher, it is possible to ensure electrical insulation, and suppress a current leaking from an electric part, such as, for example, a wire winding around a motor in the compressor, to the outside of the refrigerant circuit through the refrigerating machine oil.

Also, the refrigeration apparatus is an air conditioner, a hot water dispenser, or a cooling water circulator.

In this case, the air conditioner, the hot water dispenser, or the cooling water circulator can ensure, during operation, the amount of the acid scavenger in the refrigerant circuit, and reduce metal corrosion or the like.

### BRIEF DESCRIPTION OF THE DRAWINGS

[FIG. 1] FIG. 1 is a diagram schematically illustrating a configuration of an air conditioner according to an embodiment.
[FIG. 2] FIG. 2 is a graph indicating a relationship between a filling amount of an odor component in a refrigerant circuit, and a residual acid scavenger rate in the refrigerant circuit.
[FIG. 3] FIG. 3 is a table indicating the filling amount of the odor component in the refrigerant circuit, and the results of the residual acid scavenger rate and confirmation of metal corrosion.

### DESCRIPTION OF THE EMBODIMENTS

In the following, embodiments of the present disclosure will be described with reference to the drawings. In the drawings, the same constituent elements are denoted with the same reference numerals, and redundant description thereof may be omitted. Also, in each of the drawings, dimensions, ratios, or numbers may be exaggerated or simplified as necessary to facilitate understanding of the present disclosure.

### <Configuration of Refrigeration Apparatus>

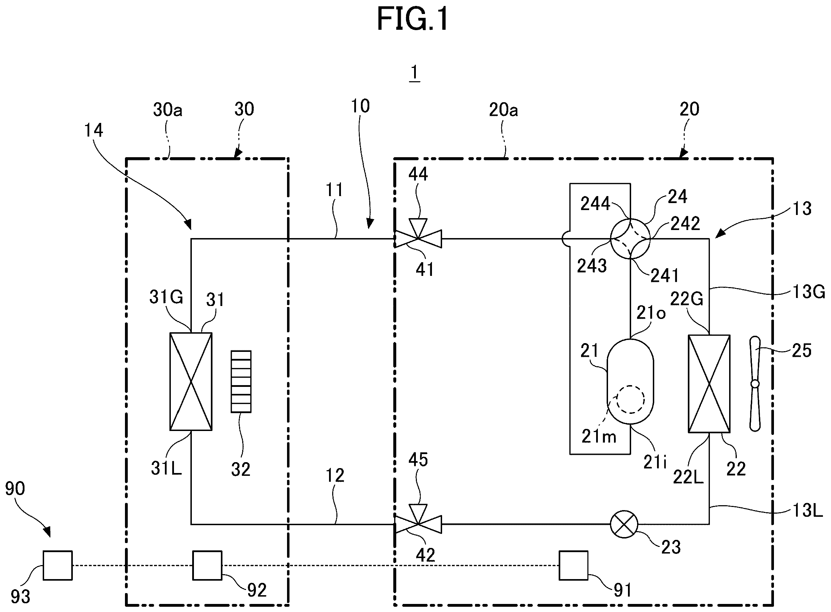

As illustrated in FIG. 1, a refrigeration apparatus 1 according to the embodiment of the present disclosure is an air conditioner that regulates a temperature of air in a room LS. Hereinafter, the refrigeration apparatus 1 is also referred to as an air conditioner 1. The air conditioner 1 is used for a cooling and a heating operation of the room LS by performing a vapor compression refrigeration cycle operation. In the cooling operation, the air conditioner 1 cools the air of the room LS to adjust the temperature. In the heating operation, the air conditioner 1 heats the air of the room LS to adjust the temperature.

The air conditioner 1 includes a refrigerant circuit 10 containing a refrigerant, an outdoor unit 20 which is a heat source unit installed in the outdoor space, and an indoor unit 30 which is a unit for use installed in the room LS. The refrigerant circuit 10 performs a cooling operation and a heating operation by circulating the refrigerant between the outdoor unit 20 and the indoor unit 30. The air conditioner 1 according to the embodiment is a pair type in which one outdoor unit 20 and the indoor unit 30 are connected. However, the air conditioner 1 may have a configuration in which one outdoor unit 20 and a plurality of indoor units 30 are connected, or a configuration in which a plurality of outdoor units 20 and one indoor unit 30 are connected.

The refrigerant circuit 10 includes a first connection pipe 11 and a second connection pipe 12 for connecting the outdoor unit 20 and the indoor unit 30. The first connection pipe 11 and the second connection pipe 12 connect the room LS with the outdoor space to circulate a refrigerant. The first connection pipe 11 is one or more gas pipes for circulating a gaseous refrigerant. The second connection pipe 12 is one or more liquid pipes for circulating a liquid refrigerant.

The refrigerant circuit 10 has an outdoor path 13 connected to one end of the first connection pipe 11 and one end of the second connection pipe 12, respectively, inside the outdoor unit 20. Furthermore, the refrigerant circuit 10 has an indoor path 14 connected to the other end of the first connection pipe 11 and the other end of the second connection pipe 12, respectively, inside the indoor unit 30. The refrigerant circuit 10 has an endless circulation circuit formed by the first connection pipe 11, the second connection pipe 12, the outdoor path 13, and the indoor path 14.

### <Outdoor Unit>

The outdoor unit 20 is a portion of the refrigerant circuit 10 by providing the outdoor path 13 inside a housing 20a. The outdoor unit 20 includes a compressor 21, an outdoor heat exchanger 22, an expansion mechanism 23, a four-way switching valve 24, and an outdoor fan 25. The compressor 21, the outdoor heat exchanger 22, the expansion mechanism 23, and the four-way switching valve 24 are connected to the outdoor path 13 of the outdoor unit 20.

In the refrigeration cycle operation, the compressor 21 compresses a low-pressure refrigerant sucked from a suction connection end 21i to increase its pressure, and discharges a high-pressure refrigerant from a discharge connection end 21o. As the compressor 21, for example, a rotary device can be used to increase the pressure of the refrigerant by rotationally driving a sealed compression element by a compressor motor 21m. The suction connection end 21i and the discharge connection end 21o of the compressor 21 are connected to the four-way switching valve 24 through the outdoor path 13.

The outdoor heat exchanger 22 is a heat source-side heat exchanger (condenser) that radiates the heat of the refrigerant by performing heat exchange between the refrigerant circulating inside and the outdoor air in the refrigeration cycle operation during a cooling operation. As the outdoor heat exchanger 22, for example, a fin-and-tube type mechanism can be used. A gas connection end 22G of the outdoor heat exchanger 22 is connected to the four-way switching valve 24 through the outdoor path 13. A liquid connection end 22L of the outdoor heat exchanger 22 is connected to the expansion mechanism 23 through the outdoor path 13.

The outdoor fan 25 blows outdoor air to the outdoor heat exchanger 22. As the outdoor fan 25, for example, a propeller fan having a motor (not shown) and a propeller can be used.

The expansion mechanism 23 is a pressure reducing device configured to reduce the pressure of the refrigerant flowing through the outdoor path 13, thereby lowering the temperature of the refrigerant. This expansion mechanism 23 includes an expansion valve of an electronic type or temperature sensitive type for adjusting an opening of an internal flow path. The expansion valve includes a metal part to be exposed to a region where the refrigerant and the odor component are circulating. A metal material of the metal part is, for example, copper, iron, aluminum, or the like. The expansion mechanism 23 may be provided in the indoor unit 30.

The four-way switching valve 24 reverses a flow of the refrigerant in the refrigerant circuit 10 forward and backward in order to selectively perform cooling and heating operations. The four-way switching valve 24 can be switched between a first state indicated by solid lines in FIG. 1 and a second state indicated by broken lines in FIG. 1.

The four-way switching valve 24 is provided with a first port 241, a second port 242, a third port 243, and a fourth port 244 to which a plurality of pipes included in the refrigerant circuit 10 can be connected. The discharge connection end 21o of the compressor 21 is connected to the first port 241 of the four-way switching valve 24 via a pipe of the outdoor path 13. The gas connection end 22G of the outdoor heat exchanger 22 is connected to the second port 242 of the four-way switching valve 24 via a pipe of the outdoor path 13. The pipe of the outdoor path 13 connected to the first connection pipe 11 is connected to the third port 243 of the four-way switching valve 24. The third port 243 is connected to the gas connection end 31G of the indoor heat exchanger 31 via the first connection pipe 11. The suction connection end 21i of the compressor 21 is connected to the fourth port 244 of the four-way switching valve 24 via a pipe of the outdoor path 13.

As shown by the solid lines in FIG. 1, the four-way switching valve 24 can form the first state in which the first port 241 and the second port 242 communicate with each other and the third port 243 and the fourth port 244 communicate with each other. Thus, in the first state, the four-way switching valve 24 communicates with the discharge connection end 21o of the compressor 21 and the gas connection end 22G of the outdoor heat exchanger 22, and communicates with the suction connection end 21i of the compressor 21 and an external first connection pipe 11 of the outdoor unit 20. In this first state, refrigerant flows from the first connection pipe 11 to the outdoor path 13 of the outdoor unit 20 based on the drive of the compressor 21. The refrigerant is compressed by the compressor 21, becomes high pressure, and moves to the outdoor heat exchanger 22 through the four-way switching valve 24. The refrigerant releases heat in the outdoor heat exchanger 22, then becomes a low-pressure, low-temperature liquid through decompression by the expansion mechanism 23, and moves to the second connection pipe 12. That is, the air conditioner 1 can perform a cooling operation by drawing a high-temperature refrigerant through the first connection pipe 11 and sending a low-temperature refrigerant to the indoor unit 30 through the second connection pipe 12.

In addition, the four-way switching valve 24 can form the second state in which the first port 241 and the third port 243 communicate with each other, and the second port 242 and the fourth port 244 communicate with each other, as shown by the broken lines in FIG. 1. Thus, in the second state, the four-way switching valve 24 communicates the discharge connection end 21o of the compressor 21 with the external first connection pipe 11 of the outdoor unit 20, and communicates the suction connection end 21i of the compressor 21 with the gas connection end 22G of the outdoor heat exchanger 22. In this second state, refrigerant flows from the second connection pipe 12 to the outdoor path 13 of the outdoor unit 20 based on the drive of the compressor 21. The refrigerant moves through the expansion mechanism 23 to the outdoor heat exchanger 22, and then from the outdoor heat exchanger 22 to the compressor 21. The refrigerant is compressed in the compressor 21, becomes a high-pressure, high-temperature gas, and moves to the first connection pipe 11 through the four-way switching valve 24. That is, the air conditioner 1 can perform a heating operation by drawing a low-temperature refrigerant through the second connection pipe 12 and sending a high-temperature refrigerant to the indoor unit 30 through the first connection pipe 11.

The outdoor path 13 of the outdoor unit 20 can be divided into a gas line 13G that mainly circulates a gaseous refrigerant and a liquid line 13L that mainly circulates a liquid refrigerant. The gas line 13G refers to a path that connects a connection point with the first connection pipe 11 to the compressor 21 and the gas connection end 22G of the outdoor heat exchanger 22. The liquid line 13L refers to a path that connects a connection point with the second connection pipe 12 to the expansion mechanism 23 and the liquid connection end 22L of the outdoor heat exchanger 22.

A first closing valve 41 is provided at the connection between the gas line 13G and the first connection pipe 11. The first closing valve 41 opens and closes the flow path of the gas line 13G based on an operation of an operator. A second closing valve 42 is provided at the connection between the liquid line 13L and the second connection pipe 12. The second closing valve 42 opens and closes the flow path of the liquid line 13L based on the operation of the operator.

The first closing valve 41 has a gas service port 44. The second closing valve 42 has a liquid service port 45. The first closing valve 41 is larger than the second closing valve 42. The gas service port 44 and the liquid service port 45 are used to fill the refrigerant circuit 10 of the air conditioner 1 with a refrigerant, to discharge the refrigerant from the outdoor unit 20, to measure the pressure of the refrigerant in the refrigerant circuit 10, and so on.

### <Indoor Unit>

Additionally, the indoor unit 30 is installed in the room LS. The indoor unit 30 is a portion of the refrigerant circuit 10 by providing the indoor path 14 inside the housing 30a. The indoor unit 30 includes an indoor heat exchanger 31 and an indoor fan 32. An indoor heat exchanger 31 is connected to the indoor path 14 of the indoor unit 30.

The indoor heat exchanger 31 is a user-side heat exchanger (evaporator) that exchanges heat between the indoor air and the refrigerant circulating inside during the refrigeration cycle operation. Thus, the indoor heat exchanger 31 can take heat from the indoor air and cool it when the refrigerant is lower in temperature than the indoor air, while it can release heat to the indoor air and warm it when the refrigerant is higher in temperature than the indoor air. As the indoor heat exchanger 31, for example, a fin-and-tube type mechanism can be used. The gas connection end 31G of the indoor heat exchanger 31 is connected to the first connection pipe 11 through the indoor path 14. The liquid connection end 31L of the indoor heat exchanger 31 is connected to the second connection pipe 12 through the indoor path 14.

The indoor fan 32 blows indoor air to the indoor heat exchanger 31. The indoor fan 32 is, for example, a cross flow fan having a motor (not shown) and a cylindrical impeller. The indoor air conveyed by the indoor fan 32 passes through the indoor heat exchanger 31 and is blown from the indoor heat exchanger 31 to the room LS.

The indoor unit 30 has a power supply circuit connected to a commercial power supply. The air conditioner 1 operates the indoor unit 30 based on supply of power from the commercial power supply and also operates the outdoor unit 20 via a power line (not shown).

### <Control Unit of Air Conditioner>

The air conditioner 1 has a control unit 90 that controls the operation of each configuration. The control unit 90 includes a first control device 91, a second control device 92, and a remote controller 93. The remote controller 93 is a device in which a person (user) operates various instructions to the air conditioner 1, and may be a dedicated controller or a portable terminal, such as a smartphone, a tablet, or the like.

Each of the first control device 91, the second control device 92, and the remote controller 93 is a computer (more specifically, an MCU: Micro Control Unit) having a processor, a memory, an input/output interface, and a communication interface. The processor is a combination of one or more of a CPU (Central Processing Unit), a GPU (Graphics Processing Unit), an ASIC (Application Specific Integrated Circuit), an FPGA (Field-Programmable Gate Array), a circuit including a plurality of discrete semiconductors, and the like. The memory includes a nonvolatile memory and a volatile memory. The memory stores programs for controlling various processes, and the processor controls various operations by reading and executing the programs stored in the memory.

The first control device 91 is provided in the outdoor unit 20 and controls each of configurations of the outdoor unit 20. The second control device 92 is provided in the indoor unit 30 and controls each of the configurations of the indoor unit 30. The first control device 91 and the second control device 92 can transmit and receive information to each other by wire communication or wireless communication. The second control device 92 and the remote controller 93 can transmit and receive information to each other by wire communication or wireless communication. The control unit 90 selectively executes a cooling operation and a heating operation according to an operation command of the remote controller 93 by a person (user).

### <Refrigerant>

It is preferable that the refrigerant sealed in the refrigerant circuit 10 has a GWP value as low as possible and has a small load on the environment. As a material of this kind of refrigerant, for example, refrigerants mainly composed of hydrocarbons having one to four carbon atoms (hydrocarbons), such as R290 (propane), R1270 (propylene), R600a (isobutane), and the like, are exemplified. Materials of these refrigerants are highly flammable refrigerants having higher combustibility than hydrofluorocarbons. In the embodiments, a case in which propane is applied as the refrigerant will be described. The refrigerant may also be methane (R50), ethane (R170), butane (R600), ammonia (R717), or the like.

### <Odor Component>

As described above, the odor component is sealed along with the refrigerant in the air conditioner 1 in order for a person to recognize leakage of the highly flammable refrigerant from the refrigerant circuit 10. Examples of the odor component include, for example, sulfur-based odorants, which are sulfur-based compounds. The sulfur-based odorants are more preferably selected from the group consisting of sulfides and thiophenes. Specific examples of the odor component include, for example, thiophene-based odorants, such as tetrahydrothiophene (THT), sulfide-based odorants, such as dimethyl sulfide (DMS), ethyl methyl sulfide, and the like, and mixtures containing sulfide-based odorants and thiols, thioethers, or the like.

The filling amount of the sulfur-based odor component to be filled into the refrigerant circuit 10 is preferably 50 ppm by weight to 2,000 ppm by weight relative to the filling amount of the refrigerant. In this case, when the refrigerant and the odor component leak from the refrigerant circuit 10, the odor component allows surrounding people to recognize abnormality. The significance of the filling amount of the odor component being set to be 2,000 ppm by weight or less will be described below in detail.

### <Refrigerating Machine Oil>

The air conditioner 1 seals refrigerating machine oil in the refrigerant circuit 10 along with the refrigerant and the odor component. The refrigerating machine oil is stored in the refrigerant circuit 10 mainly at the bottom of the compressor 21, and circulated to the compression element in the compressor 21 to maintain lubricity of a sliding unit. A portion of the refrigerating machine oil circulates in the refrigerant circuit 10 along with the refrigerant and the odor component. In other words, the refrigerating machine oil is mixed with the refrigerant and the odor component to be used as a working fluid for the refrigeration apparatus. A content ratio of the refrigerating machine oil to a total amount of the working fluid for the refrigeration apparatus is preferably 10% by weight or more and 70% by weight or less, and more preferably 20% by weight or more and 60% by weight or less.

Examples of the refrigerating machine oil include oxygenated synthetic oils, hydrocarbon-based refrigerating machine oils, and the like. Among them, polyalkylene glycol (PAG) is preferable as a hydrocarbon-based (hydrocarbon) refrigerant from the viewpoint of compatibility. Thus, in the present embodiment, polyalkylene glycol is used. One refrigerating machine oil may be used alone or two or more refrigerating machine oils may be used in combination.

Polyalkylene glycol serving as the refrigerating machine oil has properties, such as flame retardancy, a low pour point, a high viscosity index, excellent shear stability, and the like. Also, the polyalkylene glycol is an oil in which the refrigerant and the refrigerating machine oil are dissolved in a case in which a concentration of the refrigerating machine oil contained in a mixture of the refrigerant and the refrigerating machine oil is 40% by weight or more. Thus, during operation, the air conditioner 1 can circulate, in the refrigerant circuit 10, the refrigerant and the refrigerating machine oil that are in a state of being dissolved. Also, as the polyalkylene glycol, it is preferable to use a compound having a volume specific resistance at 40°C of 1×10⁶ Ω·m or higher. Thus, the polyalkylene glycol has high electrical insulation.

The refrigerating machine oil (polyalkylene glycol) according to the embodiment contains an extreme pressure agent, an antioxidant, and an acid scavenger, as additives.

### <Extreme Pressure Agent>

The extreme pressure agent is an additive used for preventing wear and seizing in a sliding unit of the compressor 21 or the like. The refrigerating machine oil forms an oil film between the surfaces of sliding members that slide relative to each other in the compressor 21, thereby preventing contact between the sliding members. However, when the pressure applied to the sliding members is high, the sliding members tend to contact each other. The extreme pressure agent reacts with the surfaces of the sliding members in the compressor 21 to form a coating film, thereby suppressing wear and seizing. Examples of the extreme pressure agent include phosphate esters, phosphite esters, thiophosphates, sulfide esters, sulfides, thiobisphenols, and the like. Specific examples of the extreme pressure agent include tricresyl phosphate (TCP), triphenyl phosphate (TPP), triphenyl phosphorothioate (TPPT), amines, alkyls having 11 to 14 carbon atoms, monohexyls, and dihexyl phosphates. For example, TCP adsorbs onto the surfaces of the sliding members and decomposes, thereby forming a coating film of a phosphate.

### <Antioxidant>

The antioxidant is an additive used for preventing oxidation of the refrigerating machine oil. Examples of this antioxidant include: zinc dithiophosphate; organosulfur compounds; phenols, such as 2,6-di-tert-butyl-4-methylphenol, 2,6-di-tert-butyl-4-ethylphenol, 2,2'-methylenebis(4-methyl-6-tert-butylphenol), and the like; amines, such as phenyl-α-naphthylamine, N,N'-diphenyl-p-phenylenediamine, and the like; N,N'-disalysilidene-1,2-diaminopropane; and the like.

### <Acid Scavenger>

The acid scavenger is an additive used for trapping an acid generated in the refrigerant circuit 10. The acid generated in the refrigerant circuit 10 may degrade the refrigerating machine oil and corrode a metal part of the refrigerant circuit 10. This acid may be generated by decomposition of odor components, such as sulfides, thiophenes, and the like. Examples of the acid scavenger include epoxy compounds, carbodiimide compounds, and terpene-based compounds. Specific examples of the acid scavenger include 2-ethylhexylglycidyl ether, phenyl glycidyl ether, epoxidized cyclohexylcarbinol, di(alkylphenyl)carbodiimide, β-pinene, and the like.

The amount of the acid scavenger added to the refrigerating machine oil may be determined in accordance with the amount of the refrigerating machine oil filled into the refrigerant circuit 10, the amount of the odor component, and the like. Specifically, the acid scavenger is preferably contained in an amount of 0.1% by weight to 2.0% by weight relative to the refrigerating machine oil, and more preferably 0.3% by weight to 1.0% by weight relative to the refrigerating machine oil.

### <Amount of Air in Refrigerant Circuit>

In the refrigerant circuit 10, the amount of air mixed into the refrigerant circuit 10 relative to the refrigerating machine oil is controlled to be 500 ppm by weight or less. The amount of air is reduced, for example, through evacuation of a filling tube performed by an operator at the time of filling the refrigerant. Thus, the acid scavenger traps the air mixed into the refrigerant circuit 10, thereby enabling suppression of a reduction in the amount of the acid scavenger.

### <Amount of Water in Refrigerant Circuit>

In the refrigerant circuit 10, the amount of water mixed into the refrigerant circuit 10 relative to the refrigerating machine oil is controlled to be 200 ppm by weight or less. The amount of water is reduced, for example, through evacuation of a filling tube performed by an operator at the time of filling the refrigerant. This can suppress generation of an acid from the odor component due to a reaction of the odor component with water mixed into the refrigerant circuit 10.

### <Evaluation Test of Amounts of Odor Component and Acid Scavenger>

The air conditioner 1 according to the embodiment is basically configured as described above. Next, an outline of an evaluation test for a relationship between the filling amount of the odor component and the amount of the acid scavenger will be described. This evaluation test includes confirmation of states of corrosion of metal parts. Specifically, iron (carbon steel), copper, and aluminum, which are metal parts used in the interior of the refrigeration apparatus, were placed in a pressure-resistant, heat-resistant test container. A sulfur-based odor component; R290, serving as a refrigerant; polyalkylene glycol, serving as a refrigerating machine oil and containing an extreme pressure agent, an antioxidant, and an acid scavenger; and water and air were added to the test container. The resulting mixture was left to stand still at 175°C for 30 days. The residual amounts of the extreme pressure agent, the antioxidant, and the acid scavenger in the refrigerating machine oil after being left to stand were measured, and the states of corrosion of the metal parts were confirmed.

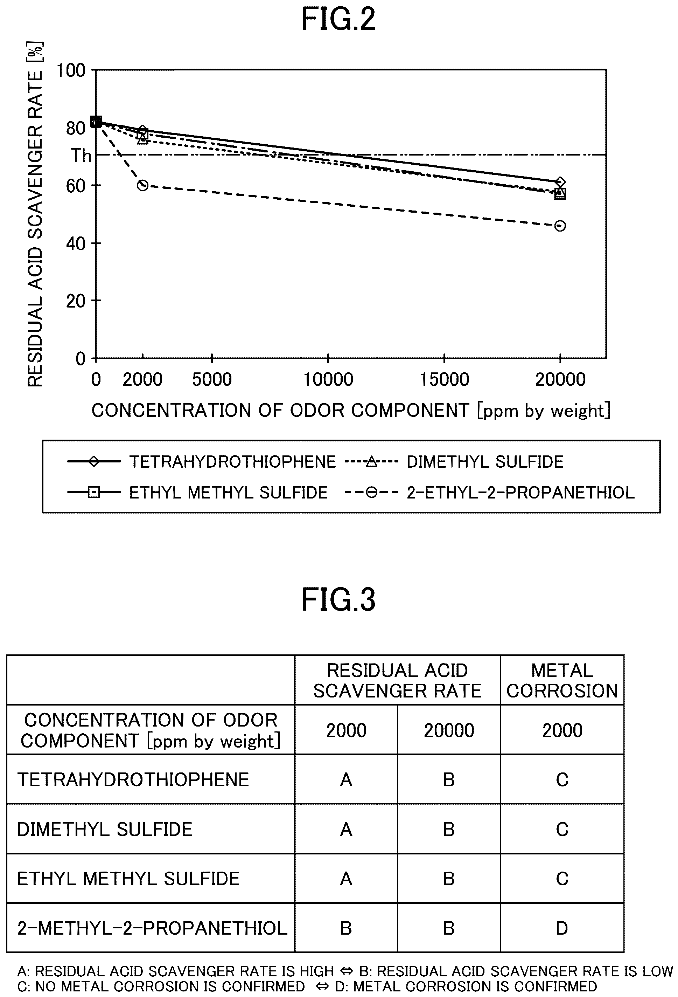

The results of the above evaluation test will be described with reference to FIGS. 2 and 3. FIG. 2 is a graph indicating a relationship between the filling amount of the odor component in the refrigerant circuit 10 and the residual acid scavenger rate in the refrigerant circuit 10.

The residual acid scavenger rate refers to a rate of the acid scavenger remaining in the refrigerant circuit 10 after passage of a predetermined time (30 days) from filling of the odor component and the acid scavenger in the refrigerant circuit 10. The rate of the acid scavenger is based on a reference (100%) of the filling amount of the acid scavenger at the time of filling, and is a value of the filling amount of the acid scavenger after passage of a predetermined time relative to the filling amount serving as the reference.

FIG. 2 shows the results obtained by measuring the residual acid scavenger rates for different odor components filled into the refrigerant circuit 10. The odor component represented by a solid line with rhombi in the graph is tetrahydrothiophene (THT). The odor component represented by a dotted line with triangles in the graph is dimethyl sulfide. The odor component represented by a dashed line with squares in the graph is ethyl methyl sulfide. The odor component represented by a dotted line with circles in the graph is 2-ethyl-2-propanethiol. Among these odor components, the filling amount of the refrigerating machine oil is set to be the same, and the filling amount of the acid scavenger is set to be the same.

The graph of FIG. 2 indicates that the residual acid scavenger rates decrease as the concentrations of the odor component increase. That is, it can be considered that the odor component generates an acid in the refrigerant circuit 10, this acid is trapped by the acid scavenger, and the acid scavenger decreases. Note that the residual acid scavenger rates slightly exceed 80% even if the concentration of the odor component is 0. This is because, for example, the acid scavenger traps air mixed into the refrigerant circuit 10.

As shown in FIG. 2, when the odor component is tetrahydrothiophene, dimethyl sulfide, or ethyl methyl sulfide, the residual acid scavenger rate gradually decreases as the concentration of the odor component increases. These odor components generate acids that increase in proportion to increasing of their concentrations, i.e., these cause the residual acid scavenger rates to linearly decrease.

Conversely, when the odor component is 2-ethyl-2-propanethiol, the concentration of the odor component rapidly decreases up to 2,000 ppm by weight. Subsequently, the residual acid scavenger rate gradually decreases as the concentration of the odor component increases. This indicates that 2-ethyl-2-propanethiol generates an acid from a state of being filled into the refrigerant circuit 10, and the acid scavenger is used for the generated acid.

The residual acid scavenger rate, i.e., the rate of the acid scavenger remaining in the refrigerant circuit 10 is preferably, for example, 70% or more. Thus, even if the acid scavenger decreases after filling of the acid scavenger in the refrigerant circuit 10, the acid scavenger can effectively trap an acid that can be generated during operation of the air conditioner 1. For example, even if the refrigerant and refrigerating machine oil are partially separated due to temperature elevation of the compressor 21, and further an acid is generated by decomposition of the refrigerant, the acid scavenger can effectively trap the generated acid.

Conversely, when the scavenger decreases to be less than 70% due to being the filled odor component, there is a higher possibility that the scavenger cannot trap an acid generated in the refrigerant circuit 10. Therefore, 70% is set as a threshold Th of the residual acid scavenger rate. In this case, 2-ethyl-2-propanethiol is already below 70% at 2,000 ppm by weight, suggesting that 2-ethyl-2-propanethiol is not suitable as the odor component to be filled into the refrigerant circuit 10 from the viewpoint of a reduction in the acid scavenger.

Tetrahydrothiophene, dimethyl sulfide, and ethyl methyl sulfide indicate that the corresponding residual acid scavenger rates are 70% or higher at 200 ppm by weight. However, the residual acid scavenger rates for these odor components gradually decrease as the concentrations of the odor components increase, and become less than 70% in a range of 6,000 ppm by weight to 10,000 ppm by weight. Further, at 20,000 ppm by weight for all the four odor components, the residual acid scavenger rates are far from 70% (around 60%).

Therefore, from the viewpoint of the upper limit of the concentration of the odor component to be filled into the refrigerant circuit 10, tetrahydrothiophene, dimethyl sulfide, and ethyl methyl sulfide are preferable. The concentration of the odor component is desirably set to be 5,000 ppm by weight or less. More preferably, considering a margin in the residual rate of the acid scavenger remaining in the refrigerant circuit 10, the concentration of the odor component may be set to be 2,000 ppm by weight or less. Also, the lower limit of the odor component to be filled into the refrigerant circuit 10 is preferably set to be a concentration at which tetrahydrothiophene, dimethyl sulfide, and ethyl methyl sulfide can exhibit functions as the odor components. The lower limit concentration of the odor component in this case is, for example, 50 ppm by weight. Therefore, it is preferable to set the filling amount of the odor component relative to the filling amount of the refrigerant to be 50 ppm by weight to 2,000 ppm by weight.

As shown in FIG. 3, the odor components at 2,000 ppm by weight were confirmed for metal corrosion of metal parts of the refrigerant circuit 10. The metal parts of the refrigerant circuit 10 are, for example, metal parts of the expansion mechanism 23 (expansion valve). When tetrahydrothiophene, dimethyl sulfide, and ethyl methyl sulfide were used as the odor components at 2,000 ppm by weight, no metal corrosion of the metal parts of the expansion mechanism 23 was confirmed. Conversely, when 2-ethyl-2-propanethiol was used as the odor component at 2,000 ppm by weight, metal corrosion of copper of the metal parts was confirmed. A presumable reason for this is that in the case of 2-ethyl-2-propanethio1, an acid generated in the refrigerant circuit 10 and not trapped by the acid scavenger reacted with the metal parts, thereby causing metal corrosion. Therefore, from the viewpoint of metal corrosion, it is not appropriate to use 2-ethyl-2-propanethiol as an odor component, and it is desirable to use tetrahydrothiophene, dimethyl sulfide, and ethyl methyl sulfide.

Also, as described above, the filling amount of the acid scavenger is, for example, set to be in the range of 0.1% by weight to 2.0% by weight relative to the refrigerating machine oil. If the acid scavenger is less than 0.1% by weight, the filling amount of the acid scavenger will be small even if the filling amount of the refrigerating machine oil is large. As a result, the function of the acid scavenger trapping an acid in the refrigerant circuit 10 becomes insufficient. Conversely, if the acid scavenger is more than 2.0% by weight, the viscosity of the refrigerating machine oil will be low. As a result, the function of the refrigerating machine oil lubricating the compressor 21 becomes insufficient.

Specifically, the viscosity (kinematic viscosity) at 40°C of the mixture containing the refrigerating machine oil and the acid scavenger in the refrigerant circuit 10 is preferably in a range of 5 cSt to 300 cSt. Thus, the refrigerating machine oil and the acid scavenger can move in the refrigerant circuit 10 with appropriate viscosity. If the viscosity of the mixture containing the refrigerating machine oil and the acid scavenger is less than 5 cSt, there is a higher possibility that the refrigerating machine oil cannot ensure lubricity of the compressor 21. The viscosity of the mixture containing the refrigerating machine oil and the acid scavenger is more than 300 cSt, there is a higher possibility that circulation of the refrigerant in the refrigerant circuit 10 is adversely influenced, causing inconveniences, such as, for example, the inability of the refrigerant to move smoothly.

Especially, when the filling amount of the acid scavenger is set to be in the range of 0.3% by weight to 1.0% by weight relative to the refrigerating machine oil, it is possible to maintain the function of the refrigerating machine oil being high while sufficiently ensuring the amount of the acid scavenger in the refrigerant circuit 10.

The concentration of the refrigerating machine oil (polyalkylene glycol) relative to the refrigerant is 40% by weight. In this case, the polyalkylene glycol is dissolved in the refrigerant. The mixture of the refrigerant and the refrigerating machine oil can stably suppress decomposition of the refrigerant in the refrigerant circuit 10, and can suppress generation of an acid from the refrigerant.

Also, the air conditioner 1 controls the discharge gas temperature of the refrigerant discharged from the discharge connection end 21o of the compressor 21 to be 120°C or lower. This can avoid the inconvenience of decomposition of the mixed refrigerant and refrigerating machine oil due to elevation of the internal temperature of the refrigerant circuit 10, and also suppress decomposition of the odor component contained in the refrigerant circuit 10.

The refrigeration apparatus of the present disclosure is not limited to the above embodiments, and can have various modified examples. For example, the refrigeration apparatus is not limited to the air conditioner 1, and may be a hot water dispenser, a cooling water circulator, or the like. An example of the hot water dispenser is of a heat-pump type. An example of the cooling water circulator is a chiller configured to circulate a refrigerant in a device to be cooled for temperature adjustment.

### <Modes and Effects of Present Disclosure>

The above-disclosed embodiments have, for example, the following modes and effects.

### [Clause 1]

A refrigeration apparatus, including a compressor, a condenser, an expansion mechanism, an evaporator, and a refrigerant circuit configured to circulate a refrigerant and refrigerating machine oil, wherein
the expansion mechanism includes an expansion valve including a metal part,
the refrigerant contains a hydrocarbon having one to four carbon atoms,
the refrigerating machine oil is polyalkylene glycol, and contains an acid scavenger in an amount of 0.1% by weight to 2.0% by weight relative to the refrigerating machine oil, and
a filling amount of a sulfur-based odor component relative to a filling amount of the refrigerant is 50 ppm by weight to 2,000 ppm by weight.

### [Effects of Clause 1]

According to the above, the odor component filled into the refrigerant circuit in an amount of 50% by weight to 2,000% by weight can provide a sufficient increase in a residual rate of the acid scavenger added to the refrigerating machine oil in an amount of 0.1% by weight to 2.0% by weight. Thus, when an acid is generated in the refrigerant circuit due to decomposition of the odor component, the acid scavenger can successfully trap the generated acid.

### [Clause 2]

The refrigeration apparatus according to clause 1, wherein
the acid scavenger is 0.3% by weight to 1.0% by weight relative to the refrigerating machine oil.

### [Effects of Clause 2]

According to this, the refrigeration apparatus can fill the refrigerant circuit with the acid scavenger in an amount sufficient to trap an acid in the refrigerant circuit while ensuring lubricity of the refrigerating machine oil.

### [Clause 3]

The refrigeration apparatus according to clause 1 or 2, wherein
an amount of air mixed into the refrigerant circuit relative to the refrigerating machine oil is 500 ppm by weight or less.

### [Effects of Clause 3]

According to this, the acid scavenger traps an acid in the air mixed into the refrigerant circuit, and thus the refrigeration apparatus can reduce the amount of the acid in the refrigerant circuit, and can suppress a reduction in the filled acid scavenger.

### [Clause 4]

The refrigeration apparatus according to any one of clauses 1 to 3, wherein
an amount of water mixed into the refrigerant circuit relative to the refrigerating machine oil is 200 ppm by weight or less.

### [Effects of Clause 4]

According to this, the acid scavenger traps an acid generated from water mixed into the refrigerant circuit, and thus the refrigeration apparatus can reduce the amount of the acid in the refrigerant circuit, and can suppress a reduction in the filled acid scavenger.

### [Clause 5]

The refrigeration apparatus according to any one of clauses 1 to 4, wherein
the refrigerating machine oil is an oil in which the refrigerant and the refrigerating machine oil are dissolved in a case in which a concentration of the refrigerating machine oil contained in a mixture of the refrigerant and the refrigerating machine oil is 40% by weight or more.

### [Effects of Clause 5]

According to this, the refrigerant and the refrigerating machine oil are dissolved in the refrigerant circuit, and thus the refrigeration apparatus can successfully circulate the refrigerating machine oil.

### [Clause 6]

The refrigeration apparatus according to any one of clauses 1 to 5, wherein
the refrigerating machine oil further contains an extreme pressure agent.

### [Effects of Clause 5]

According to this, the refrigeration apparatus can appropriately avoid wear and seizing in the compressor of the refrigerant circuit.

### [Clause 7]

The refrigeration apparatus according to any one of clauses 1 to 6, wherein
the refrigerating machine oil further contains an antioxidant.

### [Effects of Clause 7]

According to this, the refrigeration apparatus can reduce oxidation of the refrigerating machine oil.

### [Clause 8]

The refrigeration apparatus according to any one of clauses 1 to 7, wherein
a discharge gas temperature of the refrigerant discharged from the compressor is controlled to be 120°C or lower.

### [Effects of Clause 8]

According to this, the refrigeration apparatus can lower the temperatures of the refrigerant, the odor component, and the refrigerating machine oil, and thus can suppress decomposition or the like of the odor component.

### [Clause 9]

The refrigeration apparatus according to any one of clauses 1 to 8, wherein
the refrigerant is a highly flammable refrigerant.

### [Effects of Clause 9]

According to this, the refrigeration apparatus can fill the refrigerant circuit with a refrigerant with a low GWP value, and this refrigerant can successfully perform heat exchange in the condenser and the evaporator. Moreover, the filling amount of the odor component is 50% by weight to 2,000% by weight, and thus the odor component leaks along with the refrigerant. This can stably encourage people to evacuate.

### [Clause 10]

The refrigeration apparatus according to any one of clauses 1 to 9, wherein
the odor component is selected from the group consisting of sulfides and thiophenes.

### [Effects of Clause 10]

According to this, the odor component filled into the refrigerant circuit suppresses a significant reduction in the acid scavenger.

### [Clause 11]

The refrigeration apparatus according to clause 10, wherein
the odor component is tetrahydrothiophene.

### [Effects of Clause 11]

According to this, the odor component enables people to recognize abnormality upon leakage of the refrigerant circuit while suppressing a reduction in the acid scavenger.

### [Clause 12]

The refrigeration apparatus according to clause 10, wherein
the odor component is dimethyl sulfide.

### [Effects of Clause 12]

In this case, the odor component enables people to recognize abnormality upon leakage of the refrigerant circuit while suppressing a reduction in the acid scavenger.

### [Clause 13]

The refrigeration apparatus according to clause 10, wherein
the odor component is ethyl methyl sulfide.

### [Effects of Clause 13]

In this case, the odor component enables people to recognize abnormality upon leakage of the refrigerant circuit while suppressing a reduction in the acid scavenger.

### [Clause 14]

The refrigeration apparatus according to any one of clauses 1 to 13, wherein
a viscosity at 40°C of a mixture containing the refrigerating machine oil and the acid scavenger is 5 cSt to 300 cSt.

### [Effects of Clause 14]

In this manner, when the viscosity of the refrigerating machine oil and the acid scavenger is 5 cSt to 300 cSt, it is possible to smoothly circulate the refrigerating machine oil to which the acid scavenger is added, while ensuring lubricity of the compressor in the refrigerant circuit.

### [Clause 15]

The refrigeration apparatus according to any one of clauses 1 to 14, wherein
a volume specific resistance at 40°C of the refrigerating machine oil is 1×10⁶ Ω·m or higher.

### [Effects of Clause 15]

In this manner, when the volume specific resistance of the refrigerating machine oil is 1×10⁶ Ω·m or higher, it is possible to ensure electrical insulation, and suppress a current leaking from an electric part, such as, for example, a wire winding around a motor in the compressor, to the outside of the refrigerant circuit through the refrigerating machine oil.

### [Clause 16]

The refrigeration apparatus according to any one of clauses 1 to 15, wherein
the refrigeration apparatus is an air conditioner, a hot water dispenser, or a cooling water circulator.

### [Effects of Clause 16]

According to this, the air conditioner, the hot water dispenser, or the cooling water circulator can ensure, during operation, the amount of the acid scavenger in the refrigerant circuit, and reduce metal corrosion or the like.

The refrigeration apparatus 1 according to the embodiments disclosed herein is exemplary in all respects and not restrictive. The embodiments can be modified and improved in various forms without departing from the scope of the appended claims. The matters described in the above plurality of embodiments can have other configurations without contradiction, and can be combined without contradiction.

This application claims priority to Japanese Patent Application No. 2024-170795, the basic application filed with the Japan Patent Office on September 30, 2024, and the entire contents thereof are incorporated herein by reference.

### REFERENCE SIGNS LIST

- 1: Air conditioner (refrigeration apparatus)
- 10: Refrigerant circuit
- 22: Outdoor heat exchanger (condenser)
- 23: Expansion mechanism
- 31: Indoor heat exchanger (evaporator)

## Claims

1. A refrigeration apparatus (1), comprising:
a compressor (21);
a condenser (22);
an expansion mechanism (23);
an evaporator (31); and
a refrigerant circuit (10) configured to circulate a refrigerant and refrigerating machine oil, wherein
the expansion mechanism (23) includes an expansion valve including a metal part,
the refrigerant contains a hydrocarbon having one to four carbon atoms,
the refrigerating machine oil is polyalkylene glycol, and contains an acid scavenger in an amount of 0.1% by weight to 2.0% by weight relative to the refrigerating machine oil, and
a filling amount of a sulfur-based odor component relative to a filling amount of the refrigerant is 50 ppm by weight to 2,000 ppm by weight.

2. The refrigeration apparatus (1) according to claim 1, wherein
the acid scavenger is 0.3% by weight to 1.0% by weight relative to the refrigerating machine oil.

3. The refrigeration apparatus (1) according to claim 1 or 2, wherein
an amount of air mixed into the refrigerant circuit (10) relative to the refrigerating machine oil is 500 ppm by weight or less.

4. The refrigeration apparatus (1) according to any one of claims 1 to 3, wherein
an amount of water mixed into the refrigerant circuit (10) relative to the refrigerating machine oil is 200 ppm by weight or less.

5. The refrigeration apparatus (1) according to any one of claims 1 to 4, wherein
the refrigerating machine oil is an oil in which the refrigerant and the refrigerating machine oil are dissolved in a case in which a concentration of the refrigerating machine oil contained in a mixture of the refrigerant and the refrigerating machine oil is 40% by weight or more.

6. The refrigeration apparatus (1) according to any one of claims 1 to 5, wherein
the refrigerating machine oil further contains an extreme pressure agent.

7. The refrigeration apparatus (1) according to any one of claims 1 to 6, wherein
the refrigerating machine oil further contains an antioxidant.

8. The refrigeration apparatus (1) according to any one of claims 1 to 7, wherein
a discharge gas temperature of the refrigerant discharged from the compressor is controlled to be 120°C or lower.

9. The refrigeration apparatus (1) according to any one of claims 1 to 8, wherein
the refrigerant is a highly flammable refrigerant.

10. The refrigeration apparatus (1) according to any one of claims 1 to 9, wherein
the odor component is selected from the group consisting of sulfides and thiophenes.

11. The refrigeration apparatus (1) according to claim 10, wherein
the odor component is tetrahydrothiophene.

12. The refrigeration apparatus (1) according to claim 10, wherein
the odor component is dimethyl sulfide.

13. The refrigeration apparatus (1) according to claim 10, wherein
the odor component is ethyl methyl sulfide.

14. The refrigeration apparatus (1) according to any one of claims 1 to 13, wherein
a viscosity at 40°C of a mixture containing the refrigerating machine oil and the acid scavenger is 5 cSt to 300 cSt.

15. The refrigeration apparatus (1) according to any one of claims 1 to 14, wherein
a volume specific resistance at 40°C of the refrigerating machine oil is 1×10⁶ Ω·m or higher.

16. The refrigeration apparatus (1) according to any one of claims 1 to 15, wherein
the refrigeration apparatus is an air conditioner, a hot water dispenser, or a cooling water circulator.
